# FASCICULE DE BREVET EUROPEEN

(11) **EP 1 610 967 B1**
(45) Date de publication et mention de la délivrance du brevet: **13.06.2012**
(21) Numéro de dépôt: 04742429.6
(22) Date de dépôt: 02.04.2004
(51) Int. Cl.: B60G 21/05, B60G 7/00, B60G 21/055

(54) **ESSIEU SOUPLE ARRIERE A PALONNIER, ET VEHICULE CORRESPONDANT**
FLEXIBLE HINTERACHSE MIT EINER STEUERSÄULE UND ENTSPRECHENDES FAHRZEUG
FLEXIBLE REAR AXLE WITH A CONTROL COLUMN AND CORRESPONDING VEHICLE

(30) Priorité: 04.04.2003 FR 0304205
(43) Date de publication de la demande: 04.01.2006
(73) Titulaire: Renault s.a.s., 92100 Boulogne Billancourt (FR); Auto Chassis International, 92100 Boulogne Billancourt (FR)
(72) Inventeur: DOUBLET, Philippe, F-94210 La Varenne Saint Hilaire (FR); HEURTAULT, Philippe, F-72560 Change (FR); ROLLET, Rémi, F-91190 Gif Sur Yvette (FR)
(86) Numéro de dépôt international: PCT/FR2004/000832
(87) Numéro de publication internationale: WO 2004/089665

(56) Documents cités:
- EP-A- 0 560 242
- WO-A-00/74961
- DE-A- 3 139 792
- DE-A- 3 243 997
- DE-A- 3 741 144
- FR-A- 2 612 460

## Description

L'invention concerne un essieu souple arrière pour véhicule automobile à deux ou quatre roues directrices, et un véhicule comportant cet essieu.

Un essieu souple arrière de véhicule comporte généralement deux bras oscillants longitudinaux qui portent chacun une roue à une de leurs extrémités, et qui sont articulés à leur autre extrémité sur la carrosserie du véhicule. Des moyens élastiques et amortisseurs prenant appui sur les bras soutiennent élastiquement la carrosserie et une barre transversale anti-dévers élastiquement déformable en torsion est rigidement reliée par ses extrémités aux deux bras.

On définit le braquage des roues comme un angle formé entre le plan de la roue et le plan longitudinal du véhicule, dans un plan horizontal. Lors d'un braquage, lorsque l'avant de la roue se déplace vers l'intérieur (respectivement l'extérieur), on parle alors de pince (respectivement d'ouverture). Dans les virages, les roues arrières d'un véhicule subissent des efforts latéraux dans la direction du virage. Ainsi, avec un essieu souple, lors d'un virage à droite, respectivement à gauche, la roue extérieure gauche respectivement droite, a tendance à prendre de l'ouverture. Ce braquage des roues est un facteur contribuant à réduire la stabilité du véhicule.

Pour les véhicules à deux roues avant directrices, il est nécessaire de limiter la prise de pince des roues arrière lors des virages, afin d'obtenir une bonne stabilité. Pour les véhicules à quatre roues directrices, un dispositif commande la rotation des roues arrière en fonction du virage, ce qui améliore également la stabilité.

Dans les deux cas, des essieux multibras peuvent être utilisés. Ils présentent toutefois un encombrement important, qui peut s'avérer incompatible avec l'architecture du véhicule, une roue de secours par exemple, et présentent le double inconvénient d'être plus lourds et plus coûteux qu'un essieu souple.

L'invention vise à pallier ces inconvénients en proposant un essieu souple arrière permettant d'obtenir une rotation limitée des roues arrière lors d'un virage dans le même sens que les roues avant, impliquant un effet sous-vireur, qui améliore la stabilité des véhicules à deux roues directrices ou quatre roues directrices. La structure d'un essieu souple permet de se dégager des contraintes d'encombrement des essieux multibras, par exemple pour libérer un logement pour roue de secours.

A cet effet, l'objet de l'invention concerne un essieu souple arrière pour véhicule automobile comprenant deux bras oscillants longitudinaux articulés chacun à un support de roue à leur extrémité dirigée vers l'arrière du véhicule et dont l'autre extrémité est articulée à la carrosserie du véhicule, lesdits bras étant reliés par une traverse, caractérisé en ce qu'il comprend :
- un bras formant palonnier s'étendant transversalement à la traverse et relié à la partie médiane de celle-ci par un axe d'articulation sensiblement vertical,
- un élément de liaison reliant une extrémité du palonnier dirigée vers l'avant du véhicule, soit à l'extrémité d'un bras longitudinal à proximité de son articulation à la carrosserie du véhicule, soit à la carrosserie du véhicule au niveau de l'articulation dudit bras longitudinal sur la carrosserie, et sensiblement parallèle à la traverse,
- deux bielles reliant chacune une autre extrémité du palonnier dirigée vers l'arrière du véhicule à un support de roue.

Ainsi relié à la carrosserie ou au bras longitudinal, l'élément de liaison permet de limiter et/ou commander la rotation des roues dans un virage. Son parallélisme à la traverse permet par ailleurs d'éviter la création de mouvements parasites nuisibles à l'équilibre de l'essieu.

Avantageusement, les deux bielles sont articulées au palonnier et aux supports de roue par des axes de rotation sensiblement verticaux.

Les axes d'articulation des deux bielles sur le palonnier sont par exemple distincts.

Avantageusement, les extrémités de l'élément de liaison sont articulées au palonnier et, soit au bras longitudinal, soit à la carrosserie du véhicule, suivant des axes sensiblement verticaux, de manière à éviter la création de mouvements parasites.

Avantageusement, les bielles s'étendent sensiblement parallèlement à la traverse. Par exemple, chaque support de roue comporte un bras s'étendant sensiblement parallèlement au plan de la roue dans un plan sensiblement horizontal, et dont l'extrémité libre dirigée vers l'avant du véhicule est articulée à l'extrémité d'une des deux bielles.

Dans un mode de réalisation, l'élément de liaison est un vérin. Avantageusement, ledit vérin est relié à un moteur apte à piloter son déplacement. Il est alors possible de commander la rotation des roues de l'essieu en fonction du virage. Le moteur est par exemple piloté par un dispositif électronique de commande en fonction du braquage des roues avant ou de tout autre paramètre de trajectoire (par exemple, la vitesse de lacet). Ainsi, le déplacement du vérin provoque la rotation du palonnier autour de son axe, ce qui engendre, via les bielles, une rotation des supports de roues et donc des roues autour d'un axe sensiblement vertical. Ce mode de réalisation est particulièrement adapté à un véhicule à quatre roues directrices.

Dans un autre mode de réalisation, l'élément de liaison est une biellette. Cet arrangement limite l'amplitude de la rotation des roues arrière autour d'un axe vertical, car une telle rotation entraîne le palonnier dont le mouvement est freiné, via la biellette, par sa liaison avec la carrosserie du véhicule ou l'extrémité du bras longitudinal reliée à la carrosserie. Ce mode de réalisation est particulièrement adapté à un véhicule à deux roues avant directrices.

Un autre objet de l'invention concerne un véhicule automobile comportant un essieu arrière selon l'invention. Le document FR 2612460 décrit un essieu souple comprenant un méchanisme de control du parallélisme situé entre les deux bras de l'essieu souple.

L'invention est maintenant décrite en référence aux dessins annexés, non limitatifs, dans lesquels :
- la figure 1 est une vue en perspective de la partie gauche d'un essieu souple selon un premier mode de réalisation de l'invention ;
- la figure 2 est une représentation schématique d'un essieu souple suivant un deuxième mode de réalisation de l'invention.

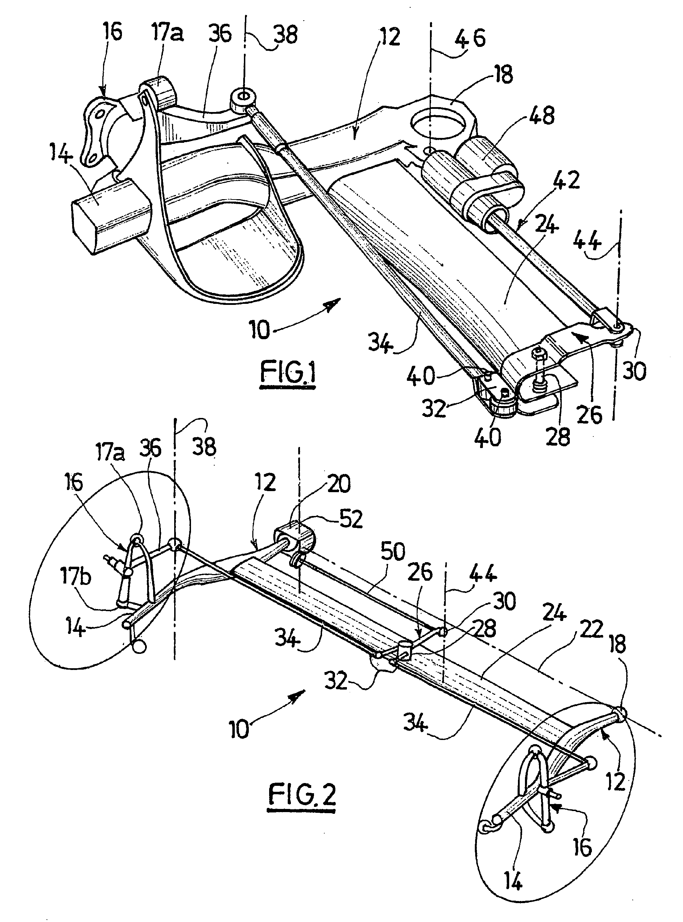

Un essieu souple 10 selon l'invention est décrit en référence aux figures 1 et 2. L'essieu 10 comprend deux bras oscillants longitudinaux 12. Chaque bras 12 est relié par son extrémité 14 dirigée vers l'arrière du véhicule à un support de roue 16. Sur la figure 2, les roues sont symbolisées par des ellipses. L'autre extrémité 18 des bras 12, dirigée vers l'avant du véhicule, est articulée à la carrosserie du véhicule 20, symbolisée sur la figure 2. Les deux bras 12 sont articulés sur la carrosserie autour d'un même axe de rotation 22, transversal par rapport à l'axe longitudinal du véhicule.

De façon connue, les supports de roue 16 sont chacun reliés aux bras 12 par deux articulations 17a, 17b, telles que des rotules.

Une traverse 24, élastiquement déformable en torsion, est rigidement reliée par ses extrémités aux deux bras 12, parallèlement et à proximité de l'axe de rotation 22. La traverse présente par exemple un profil en forme de V couché, dont l'ouverture est dirigée vers l'avant du véhicule. Bien entendu, d'autres formes de traverses peuvent être utilisées.

Un bras formant palonnier 26 s'étend transversalement à la traverse 24. Il est relié à la partie médiane de celle-ci par un axe d'articulation 28 sensiblement vertical.

L'extrémité 30 du palonnier, dirigée vers l'avant du véhicule, est reliée par un élément de liaison à l'extrémité d'un des bras longitudinaux 12 à proximité de son articulation à la carrosserie, ou à la carrosserie du véhicule 20 au niveau de l'articulation d'un bras longitudinal sur la carrosserie. L'élément de liaison s'étend sensiblement parallèlement à la traverse 24. De préférence, il est compris dans un plan comprenant les points d'articulation des bras longitudinaux 12 à la carrosserie et le centre de torsion de la traverse 24. Cet élément de liaison sera détaillé plus loin.

L'extrémité 32 du palonnier, dirigée vers l'arrière du véhicule, est reliée à chaque support de roue 16 par une bielle 34. A cet effet, chaque support de roue 16 présente un bras 36 s'étendant vers l'avant du véhicule, sensiblement horizontalement dans le plan de la roue. Ce bras 36 est suffisamment long pour que la bielle 34 soit sensiblement parallèle à la traverse 24. L'extrémité de chaque bielle 34 est alors articulée à l'extrémité libre d'un bras 36 autour d'un axe 38 sensiblement vertical, tandis que l'autre extrémité est articulée à l'extrémité 32 du palonnier 26 autour d'un axe sensiblement vertical 40. Dans les modes de réalisations représentés, les axes de rotation 40 des bielles sont distincts.

Le palonnier 26 présente par exemple une forme de fourchette, dont l'extrémité du manche forme l'extrémité arrière 32, et l'extrémité d'une des dents forme l'extrémité avant 30, tel que visible sur la figure 1. L'axe de rotation 28 est fixé sur les deux dents de la fourchette. Bien entendu, d'autres formes peuvent être envisagées en fonction de la forme de la traverse 24. On peut envisager par exemple une forme d'anneau aplati à ses extrémités avant et arrière pour supporter l'élément de liaison et les bielles respectivement.

Deux modes de réalisation de l'élément de liaison sont maintenant décrits.

Un premier mode de réalisation est décrit en référence à la figure 1, dans lequel l'élément de liaison est un vérin. Sur cette dernière, seule la partie gauche de l'essieu a été représentée. Les liaisons entre le palonnier 26 et les supports de roues 16 sont en effet identiques des deux côtés de l'essieu.

L'extrémité avant 30 du palonnier est reliée au bras gauche 12 par un vérin 42. L'extrémité de la tige du vérin est articulée à l'extrémité avant 30 du palonnier autour d'un axe 44 sensiblement vertical. L'extrémité opposée du vérin est articulée à l'extrémité avant 18 du bras 12 par un axe 46 sensiblement vertical, situé à proximité de l'articulation du bras 12 à la carrosserie du véhicule, de sorte que le vérin 42 soit sensiblement parallèle à la traverse 24.

Un moteur 48, fixé sur le bras 12 à proximité de son articulation à la carrosserie, et relié au cylindre du vérin 42, permet de commander le déplacement de ce dernier, et donc l'orientation des roues.

Dans des variantes non représentées, le vérin 42 peut être relié au bras 12 situé du côté droit du véhicule, ou bien être relié à la carrosserie 20 du véhicule au niveau de l'articulation d'un bras longitudinal à la carrosserie, du côté gauche ou droit.

Un deuxième mode de réalisation est décrit en référence au schéma de la figure 2. L'extrémité avant 30 du palonnier est reliée au côté gauche de la carrosserie du véhicule par une biellette 50. Une des extrémités de la biellette est articulée à l'extrémité avant 30 du palonnier autour d'un axe 44 sensiblement vertical. Son autre extrémité est articulée autour d'un axe sensiblement vertical 52 à la carrosserie 20 du véhicule, au niveau de l'articulation du bras gauche 12 à la carrosserie. La biellette 50 est fixée de façon à être sensiblement parallèle à la traverse 24. De même que pour le mode de réalisation précédent, la biellette 50 peut être reliée au côté droit du véhicule, ou encore être reliée directement à l'extrémité d'un des bras longitudinaux du côté de son articulation à la carrosserie.

De préférence, les différentes articulations de l'élément de liaison et des bielles sont des articulations élastiques, par exemple des rotules.

Le premier mode de réalisation fonctionne de la manière suivante. Sous l'action du moteur 48, l'allongement du vérin 42 provoque la rotation du palonnier 26 autour de son axe 28 dans le sens des aiguilles d'une montre. Cette rotation déplace l'extrémité arrière 32 du palonnier vers la gauche du véhicule, ce qui provoque la rotation des supports de roue 16, et donc des roues, autour d'un axe sensiblement vertical, vers la gauche par l'intermédiaire des bielles 34. La rétraction du vérin 42, fait tourner le palonnier dans le sens inverse provoquant la rotation des roues vers la droite. En reliant le moteur à un dispositif de commande, on peut ainsi diriger les roues arrière, par exemple en fonction des virages pris par le véhicule. Le même effet est obtenu si le vérin est relié directement à la carrosserie du véhicule au niveau du point d'articulation d'un bras longitudinal.

Le deuxième mode de réalisation correspond à un mode de fonctionnement passif lorsque le véhicule prend des virages. Lors d'un virage vers la droite, le train de roues arrière va subir un effort latéral qui va le déplacer vers la droite par rapport à la carrosserie du véhicule. Ce déplacement induit un déplacement vers la droite de l'axe de rotation 28 du palonnier qui est fixé à la traverse 24. L'extrémité avant 30 du palonnier étant quasiment solidaire de la carrosserie par l'intermédiaire de la biellette 50, elle ne sera pas entraînée vers la droite. Par conséquent, l'extrémité arrière 32 du palonnier se déplacera vers la droite par rapport à l'axe de rotation 28, provoquant un léger braquage des roues vers la droite. En raison de sa structure, l'essieu présente ainsi un effet sous-vireur en permettant aux roues de prendre de la pince de façon limitée lors des virages, ce qui améliore la stabilité du véhicule. Il est à noter que cet effet peut être complété par une disposition des articulations 17a, 17b dans le plan longitudinal du véhicule, telle que les efforts transversaux au pied de la roue extérieure au virage génèrent un couple de pince autour de l'axe 17a-17b.

## Revendications

1. Essieu souple arrière pour véhicule automobile comprenant deux bras oscillants longitudinaux (12) articulés chacun à un support de roue (16) à leur extrémité (14) dirigée vers l'arrière du véhicule, et dont l'autre extrémité (18) est articulée à la carrosserie du véhicule, lesdits bras (12) étant reliés par une traverse (24), **caractérisé en ce qu'**il comprend :
- un bras formant palonnier (26) s'étendant transversalement à la traverse et relié à la partie médiane de celle-ci par un axe d'articulation sensiblement vertical (28),
- un élément de liaison (42, 50), reliant une extrémité (30) du palonnier dirigée vers l'avant du véhicule, soit à l'extrémité (18) d'un bras longitudinal à proximité de son articulation à la carrosserie du véhicule, soit à la carrosserie du véhicule (20) au niveau de l'articulation dudit bras longitudinal sur la carrosserie, et sensiblement parallèle à la traverse (24),
- deux bielles (34) reliant chacune une autre extrémité (32) du palonnier dirigée vers l'arrière du véhicule, à un support de roue (16).

2. Essieu souple selon la revendication 1, **caractérisé en ce que** les deux bielles (34) sont articulées au palonnier (26) et aux supports de roue (16) par des axes de rotation (38, 40) sensiblement verticaux.

3. Essieu selon la revendication 1 ou 2, **caractérisé en ce que** les axes d'articulation (40) des deux bielles (34) sur le palonnier (26) sont distincts.

4. Essieu souple selon l'une des revendications 1 à 3, **caractérisé en ce que** les extrémités de l'élément de liaison (42, 50) sont articulées au palonnier (26) et, soit au bras longitudinal (12), soit à la carrosserie du véhicule (20), suivant des axes sensiblement verticaux (44, 20, 46).

5. Essieu souple selon l'une des revendications 1 à 4, **caractérisé en ce que** les bielles (34) s'étendent sensiblement parallèlement à la traverse (24).

6. Essieu souple selon l'une des revendications 1 à 5, **caractérisé en ce que** chaque support de roue (16) comporte un bras (36) s'étendant sensiblement parallèlement au plan de la roue dans un plan sensiblement horizontal, et dont l'extrémité libre dirigée vers l'avant du véhicule est articulée à l'extrémité d'une des deux bielles (34).

7. Essieu souple selon l'une des revendications 1 à 6, **caractérisé en ce que** l'élément de liaison est un vérin (42).

8. Essieu souple selon la revendication 7, **caractérisé en ce que** ledit vérin (42) est relié à un moteur (48) apte à piloter son déplacement.

9. Essieu souple l'une des revendications 1 à 6, **caractérisé en ce que** l'élément de liaison est une biellette (50).

10. Véhicule automobile **caractérisé en ce qu'**il comprend un essieu arrière selon l'une des revendications 1 à 9.

## Claims

1. Flexible rear axle for automobile vehicles, including two longitudinal oscillating arms (12) each articulated to a wheel support (16) at its end (14) directed toward the rear of the vehicle and the other end (18) of which is articulated to the bodywork of the vehicle, said arms (12) being connected by a crossmember (24), **characterized in that** it includes:
- an arm forming a swing-arm (26) extending transversely to the crossmember and connected to the median part thereof via a substantially vertical pivot (28),
- a connecting element (42, 50) substantially parallel to the crossmember (24) and connecting one end (30) of the swing-arm directed toward the front of the vehicle either to the end (18) of one longitudinal arm near its articulation to the bodywork of the vehicle or to the bodywork of the vehicle (20) at the level of the articulation of said longitudinal arm to the bodywork, and
- two links (34) each connecting the other end (32) of the swing-arm directed toward the rear of the vehicle to a wheel support (16).

2. Flexible axle according to claim 1, **characterized in that** the two links (34) are articulated to the swing-arm (26) and to the wheel supports (16) via substantially vertical pivots (38, 40).

3. Flexible axle according to claim 1 or claim 2, **characterized in that** the pivots (40) of the two links (34) on the swing-arm (26) are distinct.

4. Flexible axle according to one of claims 1 to 3, **characterized in that** the ends of the connecting element (42, 50) are articulated to the swing-arm (26) and either to the longitudinal arm (12) or to the bodywork of the vehicle (20) about substantially vertical pivots (44, 20, 46).

5. Flexible axle according to one of claims 1 to 4, **characterized in that** the links (34) are substantially parallel to the crossmember (24).

6. Flexible axle according to one of claims 1 to 5, **characterized in that** each wheel support (16) includes an arm (36) substantially parallel to the plane of the wheel in a substantially horizontal plane and the free end of which directed toward the front of the vehicle is articulated to the end of one of the two links (34).

7. Flexible axle according to one of claims 1 to 6, **characterized in that** the connecting element is an actuator (42).

8. Flexible axle according to claim 7, **characterized in that** said actuator (42) is connected to a motor (48) adapted to control its movement.

9. Flexible axle according to one of claims 1 to 6, **characterized in that** the connecting element is a short link (5).

10. Automobile vehicle **characterized in that** it includes a rear axle according to any one of claims 1 to 9.

## Patentansprüche

1. Flexible Hinterachse für ein Kraftfahrzeug, die zwei schwingende Längsarme (12) enthält, die je an ihrem zur Rückseite des Fahrzeugs gerichteten Ende (14) an einen Radhalter (16) angelenkt sind, und deren anderes Ende (18) an die Karosserie des Fahrzeugs angelenkt ist, wobei die Arme (12) durch einen Querträger (24) verbunden sind, **dadurch gekennzeichnet, dass** sie enthält:
- einen Arm, der einen Schwinghebel (26) bildet, der sich quer zum Querträger erstreckt und mit dessen mittlerem Bereich über eine im Wesentlichen senkrechte Gelenkachse (28) verbunden ist,
- ein Verbindungselement (42, 50), dass ein Ende (30) des Schwinghebel, das zur Vorderseite des Fahrzeugs gerichtet ist, entweder mit dem Ende (18) eines Längsarms in der Nähe seiner Anlenkung an die Karosserie des Fahrzeugs oder an die Karosserie des Fahrzeugs (20) im Bereich der Anlenkung des Längsarms an der Karosserie und im Wesentlichen parallel zum Querträger (24) verbindet,
- zwei Pleuelstangen (34), die je ein anderes zur Rückseite des Fahrzeugs gerichtetes Ende (32) des Schwinghebel mit einem Radhalter (16) verbindet.

2. Flexible Achse nach Anspruch 1, **dadurch gekennzeichnet, dass** die zwei Pleuelstangen (34) an den Schwinghebel (26) und an die Radhalter (16) durch im Wesentlichen senkrechte Drehachsen (38, 40) angelenkt sind.

3. Achse nach Anspruch 1 oder 2, **dadurch gekennzeichnet, dass** die Gelenkachsen (40) der zwei Pleuelstangen (34) am Schwinghebel (26) unterschiedlich sind.

4. Flexible Achse nach einem der Ansprüche 1 bis 3, **dadurch gekennzeichnet, dass** die Enden des Verbindungselements (42, 50) an den Schwinghebel (26) und entweder an den Längsarm (12) oder an die Karosserie des Fahrzeugs (20) gemäß im Wesentlichen senkrechten Achsen (44, 20, 46) angelenkt sind.

5. Flexible Achse nach einem der Ansprüche 1 bis 4, **dadurch gekennzeichnet, dass** die Pleuelstangen (34) sich im Wesentlichen parallel zum Querträger (24) erstrecken.

6. Flexible Achse nach einem der Ansprüche 1 bis 5, **dadurch gekennzeichnet, dass** jeder Radhalter (16) einen Arm (36) aufweist, der sich im Wesentlichen parallel zur Radebene in einer im Wesentlichen waagrechten Ebene erstreckt, und dessen zur Vorderseite des Fahrzeugs gerichtetes freies Ende an das Ende einer der zwei Pleuelstangen (34) angelenkt ist.

7. Flexible Achse nach einem der Ansprüche 1 bis 6, **dadurch gekennzeichnet, dass** das Verbindungselement ein Arbeitszylinder (42) ist.

8. Flexible Achse nach Anspruch 7, **dadurch gekennzeichnet, dass** der Arbeitszylinder (42) mit einem Motor (48) verbunden ist, der seine Verschiebung steuern kann.

9. Flexible Achse nach einem der Ansprüche 1 bis 6, **dadurch gekennzeichnet, dass** das Verbindungselement ein Verbindungsstange (50) ist.

10. Kraftfahrzeug, **dadurch gekennzeichnet, dass** es eine Hinterachse nach einem der Ansprüche 1 bis 9 enthält.
